Europäisches Patentamt

European Patent Office

Office européen des brevets

(11) Publication number: **0 177 462**
**A1**

(12) # EUROPEAN PATENT APPLICATION

(21) Application number: **85830242.5**

(22) Date of filing: **24.09.85**

(51) Int. Cl.⁴: **A 47 J 31/40**

(30) Priority: **04.10.84 IT 5389484 U**

(43) Date of publication of application:
**09.04.86 Bulletin 86/15**

(84) Designated Contracting States:
**AT BE CH DE FR GB IT LI LU NL SE**

(71) Applicant: **BREVETTI GAGGIA S.p.A.**

**I-20087 Robecco sul Naviglio(IT)**

(72) Inventor: **Pandolfi, Alberto**
**Via San Giacomo 2**
**I-20142 Milano(IT)**

(74) Representative: **Quinterno, Giuseppe et al,**
**c/o Jacobacci-Casetta & Perani S.p.A. Via Alfieri, 17**
**I-10121 Torino(IT)**

(54) **Metering device for a dispenser unit for a espresso coffee machine.**

(57) A water metering device for a dispenser unit (G) of an espresso coffee machine has a metering unit (C) comprising a double-acting piston (2) defining in a cylinder body (1) first and second chambers (3,4). Solenoid valves (EV1, EV2) are connected to the water supply circuit of the coffee machine and in first and second states respectively, supply water to the respective chambers (3, 4) to move the piston member (2) relative to the body (1) in opposite directions, pressuring the water in the chambers (3, 4) while connecting the dispenser unit (G) to the pressurised chamber. Control and command means (20 to 22, 40 to 49) cause changeover of the solenoid valves when the piston (2) reaches a selected position in the body (1) determined by push-button measure-selector push-buttons (30-32).

FIG. 1

0177462

- 1 -

Metering device for a dispenser unit for an espresso coffee machine.

This invention provides a water metering device for a dispenser unit of an espresso coffee machine.

The object of the invention is to provide a metering device which will be convenient, reliable and versatile in use.

This object is achieved according to this invention by a device which is characterised in that it comprises:
- a metering unit comprising a hollow body in which a piston member is sealingly slidable, defining within the body a first and second chamber
- valve means for connection to the water supply circuit of the coffee machine, to a dispenser unit and to the said first and second chamber of the metering unit; the said valve means being able in a first and a second state respectively to supply to the metering unit a flow of water which is able to induce movement of the said member relative to the body in a direction starting from a rest position and, respectively, in the opposite direction towards the said rest position, in order to pressurise the water in the first and the second chamber respectively, and to connect correspondingly the dispenser unit with the first and the second chamber respectively, and
- control and command means for effecting changeover of the valve means from the first to the second state when the said member reaches a predetermined position relative to the body.

Conveniently, according to a further characteristic, the control and command means comprise detector means able to detect the movement of the movable member of the metering unit to a plurality of predetermined positions corresponding to predetermined measures of coffee to be dispensed, and to induce changeover of the said valve means from the first to the second state when the said member passes into a preselected position among the predetermined positions.

To advantage the device may further include memory means able to memorise the number of times the metering unit has been activated.

Moreover, visual display means can be connected to the memory means in order to provide, each time they are activated, a visual indication of the number of activations of the metering unit.

Further characteristics and advantages of the device according to the invention will appear from the following detailed description, made with reference to the appended drawings, given purely by way of non-limiting example, in which:

Figure 1 is an electro-hydraulic diagram of part of an espresso coffee machine fitted with a metering device according to the invention.

Figure 2 is a diagram similar to that of Figure 1, showing the metering device in another operational state, and

Figure 3 is a partial electrical schematic diagram of another embodiment of the device according to the invention.

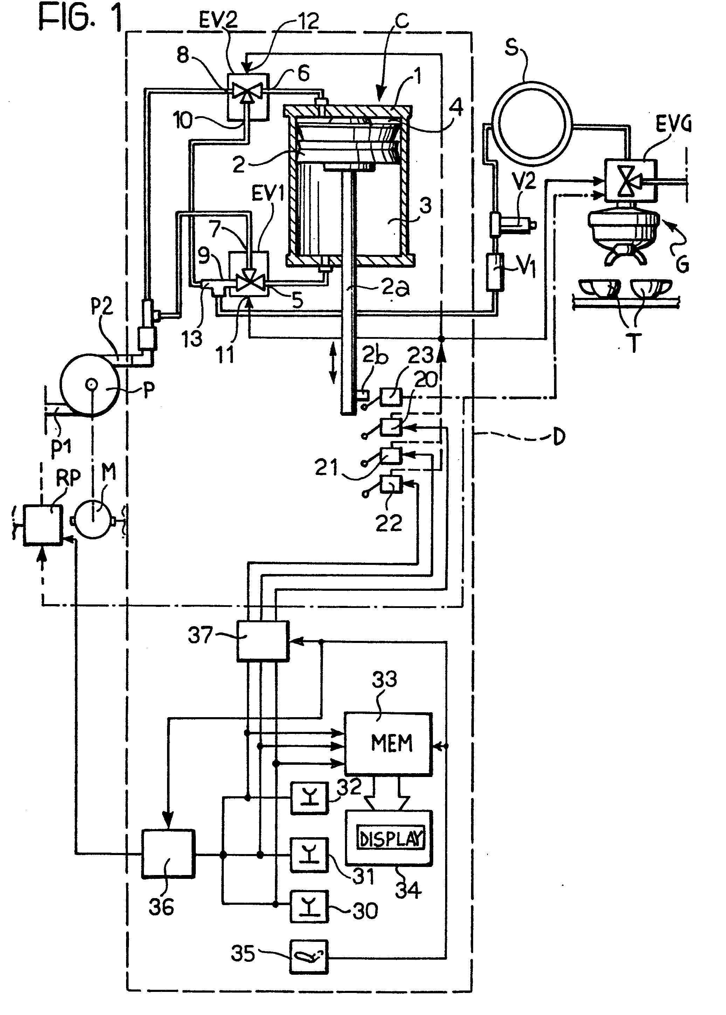

Referring to Figure 1, an espresso coffee machine comprises, in a way known per se, a pump P, driven by an electric motor M, the supply to which is controlled by a switch device RP, for example a relay. The pump P has an inlet p1 designed to be connected to the water distribution network and delivery p2 connected to a metering device according to the invention, indicated generally D. This device comprises, as will be seen below, a hydraulic part and an electrical part. The hydraulic part has a water inlet connected to the delivery p2 of the pump P, and an outlet connected to a heat exchanger S through a non-return valve V1 and a pressure-relief valve V2, in series with each other. The heat exchanger S is connected to a dispenser unit G, of a kind known per se, through a solenoid interception valve EVG. The unit G illustrated as an example is able to dispense coffee into two cups T below it.

The hydraulic part of the metering device D comprises a cylinder C of the double-acting kind, comprising a body 1 within which a piston 2 is sealingly slidable, the piston having a rod 2a projecting from the body. The piston 2 defines within the body 1 two chambers indicated 3 and 4.

Between the delivery of the pump P and the cylinder C there are interposed two three-way solenoid valves, indicated respectively as EV1 and EV2. These solenoid valves have respective first ports 5, 6 connected respectively to the chambers 3, 4 of the cylinder C. The solenoid valve EV2 also has a second part 8 connected to the delivery of the pump P, and a third part 10 connected to a port of the other solenoid valve

- 4 -

EV1 through a T-connection 13. Via this connection the ports 9, 10 of the said solenoid valve are connected to the valves V1 and V2. The solenoid valve EV1 has a further port 7 which is also connected to the delivery of the pump P.

The electrical control inputs of the solenoid valves EV1 and EV2 are indicated 11 and 12.

These solenoid valves are able in a first state to allow passage of liquid between the ports 5 and 7 and 10 and 6 respectively. From this state, in response to an electrical control signal, the solenoid valves can switch to a second state in which they allow passage of the liquid between the ports 7, 5 and 6, 10 respectively.

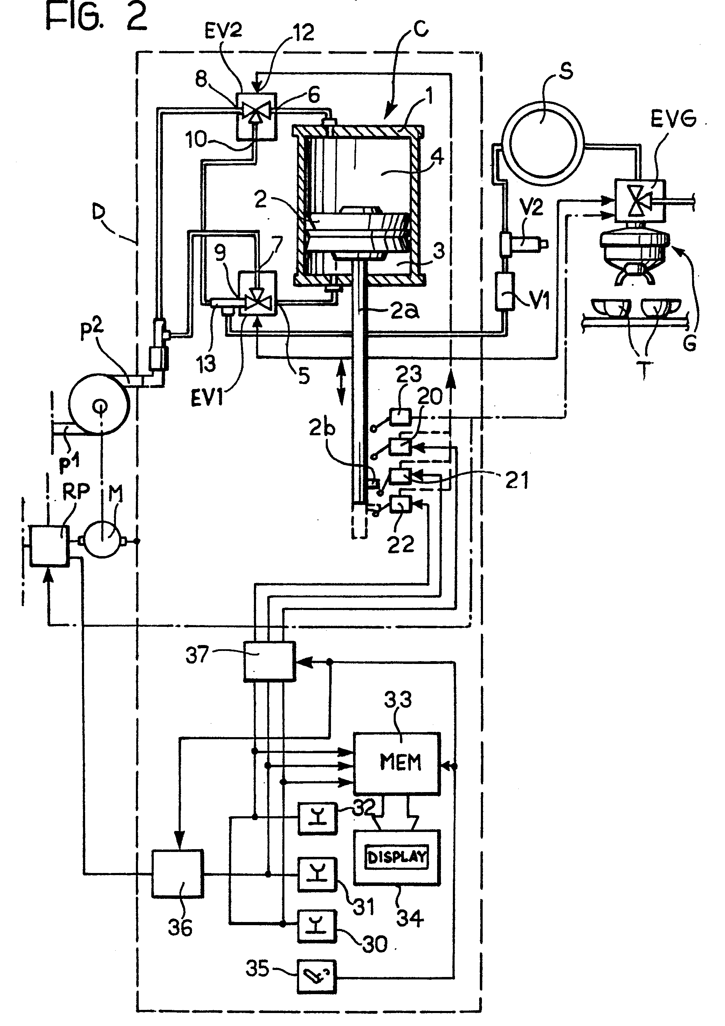

In the embodiment illustrated in Figures 1 and 2 four microswitches 20 and 23 cooperate with the piston rod 2a of the cylinder C, these four microswitches being mounted on the body 1 of the cylinder at respective positions located at predetermined respective distances along the stroke of the said rod. The latter has an end projection 2b which is able to act upon the operating members of the said microswitches when the piston 2 is in predetermined positions relative to the body of the cylinder. More particularly, when the said piston is in or reaches the end-of-stroke position shown in Figure 1, it operates the microswitch 23. The microswitches 20 to 22, on the other hand, are operated successively when the piston, having left the end-of-stroke rest position, moves downwards as viewed in Figures 1 and 2. The microswitches 20 to 23 therefore perform the function of sensors of the position of the piston relative to the body of the cylinder. The microswitches 20 to 22 are connected to the control inputs of the solenoid valves EV1 and EV2 so that each of them is able to effect changeover of the said solenoid valves when it is operated by the piston rod of the metering cylinder, so long'as it has been previously enabled in the manner which will be described below.

When the piston 2 reaches the end of stroke position of Figure 1, the microswitch 23 effects closure of the solenoid valve EVG and de-energisation of the motor M of the pump P via the relay RP.

The device according to the invention in the embodiment illustrated by way of example in Figures 1 and 2 comprises three manually operated selector devices 30 to 32 consisting of for example push-button switches. These devices are connected to the relay RP which controls the supply to the motor M of the pump P, in such manner that each of them can cause operation of the pump when it is acted upon.

The selector devices 30 to 32 are moreover connected respectively to the microswitches 20 to 22, in such manner that, in use, only that one of microswitches which is connected to the device 30 or 31 or 32 will be enabled. The push-button selector devices 30 to 32 are also connected in sequence to respective inputs of a memory device 33 including counters, connected in turn to a visual display unit 34 comprising, for example of a so-called "display" (provided with decoder circuits of know kind).

Indicated at 35 is a manually operated switching device connected to the memory device 33 and to the command inputs of two enabling circuits 36 and 37 interposed between the push-button switches 30 and 32 and the relay RP, and, respectively, between the said push-button switches and the microswitches 20 to 22. When the switching device 35 is in its first state, the enabling circuits 36 and 37 allow control of the relay RP and enabling of the microswitches 20 to 22 by the push button switches 30 to 32. Moreover the memory device 33 is in the "write" condition.

When the switch 35 is manually set into its other condition, the enabling circuits 36 and 37 decouple the push-button switches 30 and 32 from the relay RP and from the microswitches 20 to 22. Also, the memory device 33 is forced into the "read" condition by the visual display device 34.

The device according to the invention described above operates in the following manner.

It will be supposed that the device is initially in the condition illustrated in Figure 1, that the switching device 35 is in the first condition described above, that the solenoid valves EV1 and EV2 are in their respective first conditions described above, and that the solenoid valve EVG is in the closed condition.

In this situation, if any one of the push-button switches 30 to 32 is pressed the pump P is operated by the motor M and the solenoid valve EVG is opened. Moreover the microswitch (20 or 21 or 22) connected to the push-button switch (30 or 31 or 32) which is acted upon is enabled to operate.

Upon operation of the pump P water is supplied (through EV2) to the chamber 4 of the cylinder C and causes movement of the piston 2 to reduce the volume of the chamber 3, inducing a flow of pressurised water to the dispenser unit G through the solenoid valve EV1, the valves V1 and V2, the heat exchanger S and the solenoid valve EVG. Dispensing of coffee thus commences.

When the projection 2b of the piston 2 operates microswitches enabled by the push-button which has been pressed the said microswitch causes changeover of the solenoid valves EV1, EV2, so that the delivery of the pump P will now be connected to the chamber 3 of the cylinder C (through EV1). Consequently the direction of movement of the piston 2 is reversed, and the chamber 4 is reduced in volume and put under pressure: a flow of pressurised water is then fed to the dispenser unit G through the solenoid valve EV2, the valves V1 and V2, the heat exchanger and the solenoid valve EVG: the dispensing of coffee continues.

When the piston 2 again reached the end of stroke position (Figure 1) then the projection 2b on its rod operates the end of stroke microswitch 23, cuts off the electrical supply to the motor M of the pump and causes changeover of the solnoid valve EVG into the closed condition: the dispensing of coffee is then stopped.

From what has been described above it will be apparent that according to which of the push-button switches 30 to 32 is activated, reversal of the motion of the piston 2 takes place at different positions in relation to the body 1 of the cylinder C, and the quantity of water fed to the dispenser unit, and hence the quantity of espresso coffee dispensed, is varied. The push-button selector devices 30 to 32 act both as devices controlling the operation of the coffee machine and at the same time as devices for selecting the measure of espresso coffee to be dispensed.

Each time one of the push-button devices 30 to 32 is operated, then, a count is increased in a corresponding memory area of the memory device 33.

When the switching device 35 is changed over into the second condition described above, then activation of any one of the push-button command and selector devices 30 to 32 no longer has any effect on the pump, although it brings about a reading on the part of the visual display 34 of the count in relation to the button activated: the visual display device 34 therefore supplies a visual indication of the number of activations, and hence the number and measure of coffees dispensed, corresponding to the push-button pressed.

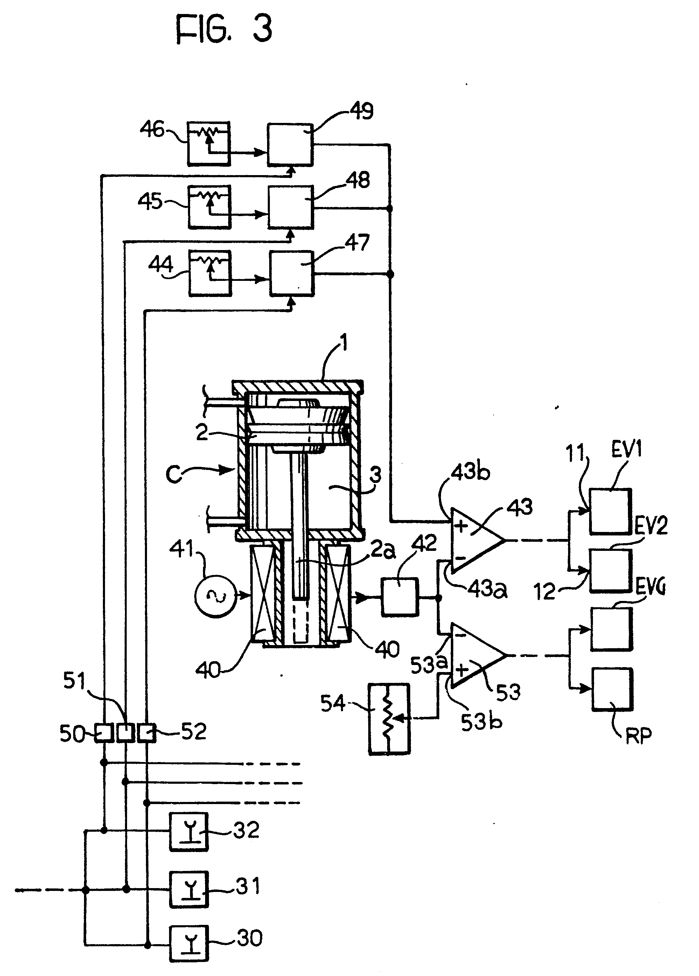

A partial variant of embodiment of the device shown in Figures 1 and 2 is illustrated in Figure 3, in which the references previously used have again been accorded to the elements and devices already described.

According to this variant, in order to record the variations in position of the piston 2 in relation to the body of the cylinder C a circuit arrangement is used which will now be described.

On the outside of the body 1 of the metering cylinder, coaxially with the stroke of the piston rod 2a, there is assembled a coil 40 of conductive wire. To this coil there is connected an oscillator 41 designed to supply to the coil a signal with a frequency of, for example, 80 KHz. In operation the magnetic reluctance and hence the impedance of the coil 40 varies with variation of the position of the piston 2 in relation to the body of the cylinder 1. Connected to the coil 40 is a signal processing circuit 42 of a kind known per se, which is able to supply a D.C. output signal having a variable amplitude according to the variation in a position of the piston relative to the body 1.

The output of the processor circuit 42 is connected to an input 43a of a comparator 43, to the other input 43b of which there is connected a series of generator circuits 44 to 46 of different adjustable D.C. reference voltages. Each of these may consist of a simple potentiometer and is connected to the input 43b of the comparator 43 through a respective analog switch 47 to 49. The command inputs of these analog switches are serially connected to the push-button command and selector devices 30 to 32, through respective flip-flop memory circuits 50 to 52.

The output of the signal processor circuit 42 is moreover connected to an input 53a of another comparator circuit 53, the other input 53b of which is connected to a DC reference source 54, which also includes, for example, a potentiometer.

The reference voltages supplied by the circuits 44 to 46 correspond to the value assumed by the signal emitted by the processor circuit 42 when the piston 2 is in special predetermined positions relative to the body 1. These reference voltages therefore correspond to predetermined measures of espresso coffee to be dispensed.

The reference voltage at the input 53b of the comparator 53 corresponds to the output voltage supplied by the processor circuit 42 when the piston 2 is in the end of stroke position.

In operation, if the switching device 35 is in the first postion previously illustrated, then activation of one of the command and selector devices 30 to 32 causes application to the input 43b of the comparator 43 of the reference voltage produced by a corresponding generator circuit 44 to 46. In this way the desired measure of espresso coffee to be dispensed is established. The piston 2 leaves its rest position and dispensing starts. When the said piston reaches a position at which the circuit 42 supplies to the input 43a of the comparator 43 a voltage corresponding to that present at its other input 43b, the comparator circuit 43 effects changeover of the solenoid valves EV1 and EV2, causing reversal of the motion of the piston. Dispensing follows until the piston arrives at the end of stroke position: in this state the output of the comparator 43 changes its level, causing switching of the solenoid valve EVG into its closed state, and de-activation of the pump, through the relay RP.

Although there has been described and illustrated one embodiment of a dispenser device designed to allow selection between three predetermined measures of espresso coffee to be dispensed, it will be apparent to experts in the field that the device can be readily modified so as to permit selection from various predetermined measures.

0177462

- 12 -

<u>CLAIMS</u>

1.    Water metering device for a dispenser unit (G)  of an espresso  coffee machine, characterised in  that  it comprises:

-    a  metering unit (C) comprising a hollow  body  (1) within which a piston member (2) is sealingly  slidable, defining  in the body (1) a first and a  second  chamber (3, 4).

-    valve  means  (EV1, EV2)  for  connection  to  the hydraulic  water supply circuit of the  coffee  machine, to  a  dispenser  unit (G) and to  the  said  first  and second  chamber  (3, 4) of the metering  unit  (C);  the said  valve means being designed, in a first and  second state  respectively, to supply to the metering unit  (C) a  flow  of  water  to effect  movement  of  the  piston member  (2)  relative  to  the body  (1)  from  a  rest position  and, respectively, in the  opposite  direction towards the said rest position, so as to pressurise  the water  in  the  said first andsecond  chambers  (3,  4) respectively,  and  to  connect  correspondingly  the dispenser  unit  (G)  with  the  first  and  the  second chambers (3, 4) respectively, and

-    control and command means (20 to 22, 40 to 49,  30 to  32) for causing changeover of the valve means  (EV1, EV2)  from the first to the second state when  the  said member (2) reaches a predetermined position relative  to the body.

2.     Device  according to Claim 1,  characterised  in that the said control and command means include detector means  (20 to 22; 40 to 49) able to detect the  movement of the piston  member (2) of the metering unit (C) to  a plurality of predetermined positions corresponding to predetermined measures of coffee to be dispensed, and to induce changeover of the valve means (EV1, EV2) from the first to the second state when the said piston member (2) reaches a pre-selected one of the said predetermined positions.

3. Device according to Claim 2, characterised in that it comprises a plurality of manually - operable selector devices (30 to 32) cooperating with said detector means (20 to 22; 40 to 49) and able to allow selection of the position at which the direction of movement of the piston member (2) of the metering unit (C) is reversed and hence to determine the measure of coffee to be dispensed.

4. Device according to Claim 3, characterised in that the said selector devices (30 to 32) are connected to the electrical supply of the electrical pump (M, P) for feeding water to the coffee machine, so as to cause its activation each time any one of the said selector devices (30 to 32) is operated.

5. Device according to any of the preceding claims, characterised in that it further includes memory means (33) able to memorise the number of activations of the metering unit (C).

6. Device according to Claims 2 to 5, characterised in that the said memory means (33) are connected to the said plurality of selector devices (30 to 32) and are predisposed to memorise the number of activations of the metering unit (C) for each measure of the said plurality of predetermined measures.

7. Device according to Claim 5, characterised in that it further includes visual display means (34) connected to the said memory means (33) in order to provide, when activated, a visual indication of the number of activations of the metering unit (C).

8. Device according to Claims 6 and 7, characterised in that the visual display means (34) consist of a single visual display device connected to the said memory means (33); command means (30 to 32, 35) being provided in order to effect selected display of the number of activations of the metering unit (C) for each measure of coffee dispensed.

9. Device according to Claims 4 and 7, characterised in that the said selector devices (30 to 32) are also connected to the memory means (33) and to the visual display device (34), and in that there is further provided a manually operated switching device (35) which in a first condition, enables the said selector devices (30 to 32) for the activation of the said electrical pump (M,P) and for selection of the measure of coffee to be dispensed and, in a second condition, causes presentation on the said visual display device (34) of the number of operations of the metering unit (C) in relation to the measure corresponding to the selector device (30 to 32) activated for the time being.

10. Device according to any of the preceding claims, characterised in that the said metering unit consists of a double-acting hydraulic cylinder (C).

11.    Device according to Claim 10, characterised in that the said valve means comprise

-    a first three-way solenoid valve (EV1) having a first port (5) connected to the said first chamber (3) of the metering unit (C) and second and third ports (7, 9) connected respectively to the water supply of the coffee machine and to the dispenser unit (G); and

-    a second three-way solenoid valve (EV2) having a first port (6) connected to the second chamber (4) of the metering unit (C), and second and third ports (8, 10) connected respectively to the water supply and to the third port (9) of the said first solenoid valve (EV1),

-    the second and third ports of each solenoid valve (EV1, EV2) being selectively connectable to the first port thereof according to the operative state of said valve.

12.    Device according to Claim 2 and 10, characterised in that the said detector means comprise a plurality of microswitches (20 to 22) fixed to the body (1) of the said metering cylinder (C) in respective predetermined positions and provided with a command member cooperating with the piston (2, 2a, 2b) of the said cylinder (C).

13.    Device according to Claims 2 and 10, characterised in that the said detector means comprise

-    an oscillator (4) to which is connected

-    a coil (40) fixed to the cylinder body (1) arranged around the rod (2a) of the piston (2) of the cylinder (C) so that the said rod (2a) projects into the coil (40) to a variable degree in its movement in relative to the body (1); and

- a processor circuit (42) connected to the coil (40) and predisposed to supply an electrical signal the amplitude of which indicates the current circulating in the coil (40) and hence the position of the piston (2) relative to the cylinder body (1).

14. Device according to Claims 3 and 13, characterised in that the said detector means further comprise

- a first comparator circuit (43) having a first input (43a) connected to the output of said processor circuit (42) and a second input (43b) connected to reference voltage generator circuits (44 to 46) controlled by the said measure selector devices (30 to 32), and able to output different predetermined reference voltages according to the selector device (30 to 32) activated; the output of the said first comparator circuit being connected to the control inputs of the said solenoid valves (EV1, EV2).

15. Device according to Claim 13 or Claim 14, characterised in that the said detector means also include a second comparator circuit (53) having a first input (53a) connected to the output of said processor circuit (42) and a second input (53b) connected to a threshold voltage source (54) corresponding to the rest position of the piston (2) of the metering cylinder (C).

16. Device according to Claim 14 or Claim 15, in which the reference voltage and/or the threshold voltage is adjustable.

0177462

FIG. 1

0177462

# FIG. 2

FIG. 3

3/3

0177462

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 637 431 (EGLOFF & CO.) <br><br> * Whole document * | 1-4,10 -12 | A 47 J 31/40 |
| X | FR-A-2 367 275 (RENEKA SA) <br><br> * Whole document * | 1-4,10 -13 | |
| X | US-A-3 430 552 (RENNER et al.) <br><br> * Whole document * | 1,5,10 ,11 | |
| X | FR-A-2 166 339 (GAGGIA S.P.A.) <br><br> * Whole document * | 1,10, 11 | |
| X | US-A-4 213 544 (PANDOLFI) <br><br> * Whole document * | 1,10, 11 | **TECHNICAL FIELDS SEARCHED (Int. Cl.4)** <br><br> A 47 J |

The present search report has been drawn up for all claims

| Place of search | Date of completion of the search | Examiner |
|---|---|---|
| THE HAGUE | 07-01-1986 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82